# DEMANDE DE BREVET EUROPEEN

(11) **EP 0 618 711 A1**
(43) Date de publication de la demande: **05.10.1994**
(21) Numéro de dépôt: 94400693.1
(22) Date de dépôt: 30.03.1994
(51) Int. Cl.: H04M 1/274

(54) **Carte de visite électronique à appel automatique**

(30) Priorité: 30.03.1993 FR 9303689
(71) Demandeur: J.Y. PUBLICITE, F-76400 Fecamp (FR)
(72) Inventeur: Cacheleux, Françoise, F-76400 Fecamp (FR); Deshoulieres, Jean-Paul, F-76230 Bois Guillaume (FR)
(74) Mandataire: Phélip, Bruno

(57) **Abrégé**

L'invention concerne une carte de visite électronique à appel automatique (1) comportant un support d'informations visuelles et un circuit intégré comprenant un microprocesseur (2), au moins un contacteur (6 à 13), un émetteur sonore (4) et une source électrique (5).

La carte de visite électronique à appel automatique comporte une mémoire morte (3) associée à chaque contacteur (6 à 13) contenant une information préenregistrée représentative d'un numéro d'appel téléphonique, et en ce qu'une action d'un utilisateur sur un contacteur (6 à 13) produit l'émission d'un signal sonore codé en fonction de l'information préenregistrée, de telle sorte que celui-ci engendre la composition du numéro d'appel téléphonique qu'elle représente, lorsque l'émetteur sonore (4) est approché du micro d'un combiné téléphonique.

## Description

La présente invention concerne une carte de visite électronique à appel automatique qui incite la personne qui la détient à appeler par téléphone celle dont elle provient et facilite cet appel téléphonique.

On sait que les cartes de visite sont d'excellents supports publicitaires. C'est la raison pour laquelle des cartes de visite de formes et de structures variées ont été conçues. Elles peuvent se différencier par le message imprimé qu'elles portent, leur couleur, leur forme, leur matière, leur odeur, leurs dimensions....

Toutefois, toutes ces cartes obligent leurs détenteurs à composer le numéro d'appel téléphonique qu'elle porte généralement, de manière traditionnelle, à l'aide du clavier ou du cadran d'un poste d'appel.

On connaît par ailleurs des dispositifs électroniques du type répertoire permettant à leurs utilisateurs de composer un numéro d'appel téléphonique par la commande d'un émetteur sonore ou buzzer.

Le détenteur d'un tel dispositif doit tout d'abord saisir les informations qui lui sont fournies par ses interlocuteurs dans son répertoire, par exemple à partir d'une carte de visite traditionnelle qui lui a été remise puis, ultérieurement, lorsqu'il désire appeler la personne considérée, il doit l'identifier par des critères de sélection traditionnels et, par l'action d'une commande, engendrer l'émission d'un signal sonore par le buzzer, codé par le numéro d'appel téléphonique de son correspondant.

Ces manipulations sont donc lourdes et complexes, et ces dispositifs sont destinés à permettre le stockage, dans une même machine ou un même répertoire, des coordonnées et numéros d'appels téléphoniques d'un grand nombre de personnes.

Le document US-A-4.995.077 décrit par ailleurs un dispositif permettant de composer un numéro de téléphone automatiquement. La carte téléphonique décrite dans ce document comprend un support en fibre de verre et un circuit intégré comprenant une source électrique, un émetteur sonore, un commutateur et un microprocesseur. Un unique numéro est mémorisé dans le microprocesseur.

Le document EP-A-0.318.454 décrit également un dispositif permettant de composer automatiquement un numéro de téléphone préalablement mémorisé. Ce dispositif comprend également des moyens de mémorisation d'un numéro de téléphone, un émetteur sonore, une source électrique et un unique commutateur, ces différents composants étant placés sur un support rigide mais flexible. Ce dispositif permet également de ne composer qu'un unique numéro de téléphone mémorisé dans une mémoire morte.

L'objet de la présente invention est de proposer une carte de visite électronique à appel automatique permettant à son détenteur d'appeler très simplement par téléphone la personne qui est à l'origine de la carte.

Un autre objectif de la présente invention est de proposer une carte de visite électronique à appel automatique, dont le coût est suffisamment faible pour ne pas freiner sa diffusion.

C'est encore un objectif de la présente invention de proposer une carte de visite électronique à appel automatique dont les dimensions générales, et l'épaisseur en particulier, peuvent être faibles.

C'est encore un objectif de la présente invention de proposer une carte de visite électronique à appel automatique, dont le maniement est facilement accessible à tous.

A cet effet, l'invention concerne une carte de visite électronique à appel automatique comportant un support d'informations visuelles et un circuit intégré comprenant un microprocesseur, au moins un contacteur, un émetteur sonore et une source électrique.

Selon l'invention, cette carte de visite électronique à appel automatique comporte une mémoire morte, associée à chaque contacteur, contenant une information préenregistrée représentative d'un numéro d'appel téléphonique. Une action d'un utilisateur sur un contacteur produit l'émission d'un signal sonore codé en fonction de l'information préenregistrée, de telle sorte que celui-ci engendre la composition du numéro d'appel téléphonique qu'elle représente, lorsque l'émetteur sonore est approché du micro d'un combiné téléphonique.

Dans différents modes de réalisation préférés, l'invention comporte les caractéristiques suivantes, selon toutes leurs combinaisons techniquement possibles
- elle comporte un support portant le circuit intégré, les contacteurs, l'émetteur sonore et la source électrique, et une feuille de matière plastique recouvrant ces composants, fixée par collage sur ledit support, ladite feuille constituant le support d'informations visuelles ;
- la feuille en matière plastique est imprimée par sérigraphie ;
- elle comporte une diode et un contacteur de test permettant de tester l'usure de la pile ;
- chaque contacteur est associé à une bascule électronique et à une mémoire, un changement d'état d'une bascule provoqué par l'action de l'utilisateur sur le contacteur produisant l'émission par l'émetteur sonore d'un signal codé en fonction de l'information contenue dans la mémoire ;
- elle comporte huit contacteurs et 8 mémoires préprogrammées ;
- l'une des informations préenregistrées correspond à un numéro d'appel d'une région extérieure à celle du numéro appelé ;
- ses dimensions sont celles d'une carte de visite normalisée ;
- elle est parallélépipédique, sa longueur est comprise entre 82 et 90 mm, sa largeur est comprise entre 50 et 58 mm, et son épaisseur est comprise entre 1,8 et 2,2 mm ;
- les informations visuelles représentent les nom, titre, qualité, adresses et numéros d'appel téléphoniques d'une personne.

Un mode de réalisation de l'invention sera décrit plus en détail, en référence aux dessins annexés dans lesquels :

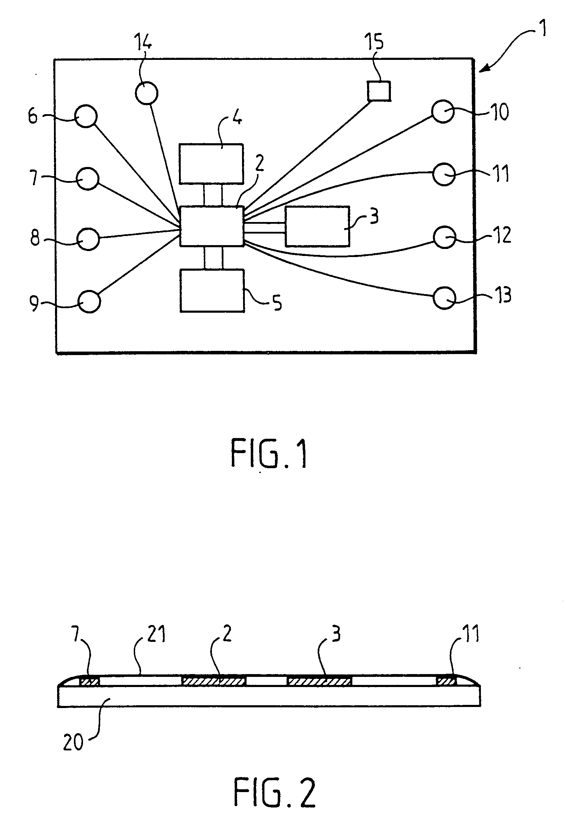

- la Figure 1 est une représentation schématique de la carte de visite électronique à appel automatique selon l'invention ;
- la Figure 2 est une représentation schématique vue en coupe de la carte de visite électronique à appel automatique de l'invention ;

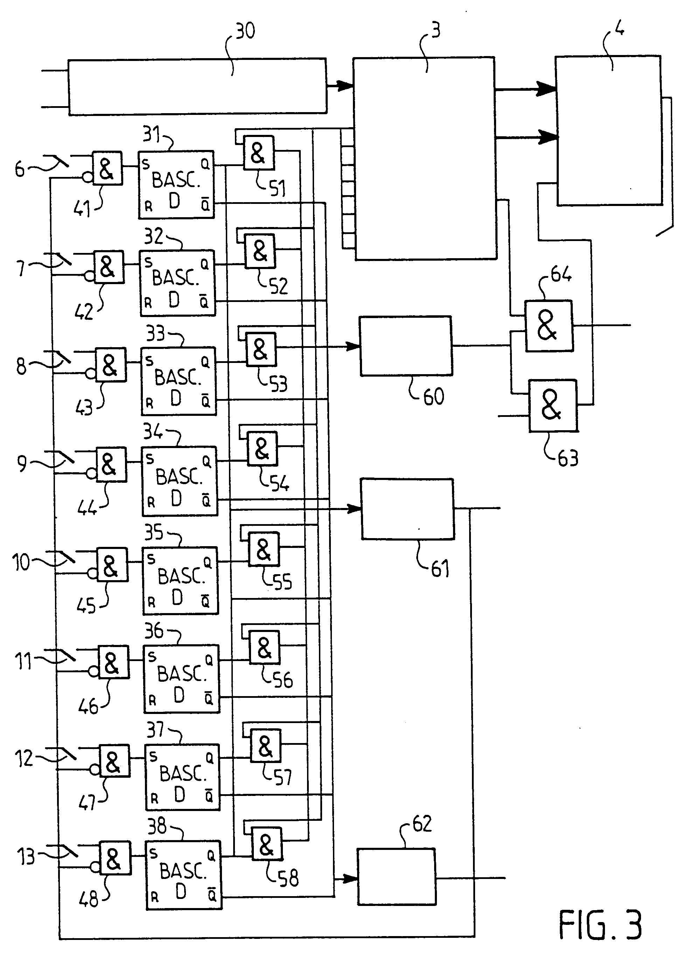

- la Figure 3 est une représentation schématique du circuit intégré de l'invention.

La carte de visite électronique à appel automatique 1 comporte un circuit intégré comprenant un microprocesseur 2, une mémoire 3, un émetteur sonore ou buzzer 4, une source électrique 5 et des contacteurs 6 à 13.

Par simplification, on appellera par la suite "buzzer" l'émetteur sonore.

La mémoire 3 a été préprogrammée et contient des informations représentatives de numéros d'appels téléphoniques, par exemple selon le mode de réalisation représenté de huit numéros d'appels.

Le microprocesseur 2 reçoit les informations de commande de l'utilisateur par l'intermédiaire des contacteurs 6 à 13.

Comme nous le verrons plus loin en détail, l'utilisateur obtient la fonction qu'il recherche à un moment donné par l'actionnement d'une touche unique.

Le microprocesseur et le buzzer reçoivent l'énergie qui leur est nécessaire de la source 5, et le microprocesseur 2 commande le buzzer 4 en fonction de la touche actionnée par l'utilisateur en exploitant les informations enregistrées dans la mémoire 3.

La mémoire 3 comporte des informations représentatives de numéros d'appels téléphoniques. Le microprocesseur 2 coopère avec cette mémoire 3 de telle sorte que, sur l'action de l'utilisateur, le buzzer 4 émet un signal sonore codé et que lorsqu'il est reçu par l'émetteur d'un combiné d'appareil téléphonique, il déclenche automatiquement la composition du numéro d'appel téléphonique sélectionné dans la mémoire 3.

Ce codage dépend de la normalisation en usage sur le réseau téléphonique utilisé et dépend généralement du pays concerné, il peut même être spécifique de chaque opérateur de réseau.

Ces codages font l'objet d'une normalisation connue et accessible à l'homme du métier.

La carte de visite électronique à appel automatique comporte de préférence un support 20, par exemple tel que ceux connus pour porter les circuits intégrés et composants discrets des appareils électroniques.

Ce support 20 porte le buzzer 4, le microprocesseur 2, la mémoire 3, la source 5 et les contacteurs 6-13.

Il est recouvert d'une feuille 21 en matière plastique.

Cette feuille 21 est fixée sur le support 20, sur les composants 2 à 13 par l'intermédiaire d'une couche adhésive 22.

Le support CMS assure la flexibilité de la carte et permet d'éviter toute déformation excessive ou toute contrainte mécanique, auxquelles pourraient être exposés les composants 2 à 13.

Ce support 20 est de préférence réalisé en matériau composite, tel qu'une résine renforcée par des fibres ou par une charge minérale.

La feuille de matière plastique 21 peut recevoir les informations visuelles. Ce peut être une feuille stratifiée se composant, par exemple, d'une couche portant directement les informations visuelles, par exemple sous forme imprimée, et d'une couche de protection.

Les informations visuelles peuvent également être réalisées par sérigraphie sur la couche de matière plastique.

Selon un procédé de fabrication préféré, les composants électroniques 2 à 13 sont fixés sur le support 20, après que celui-ci ait été découpé ou prédécoupé à ses dimensions finales.

Par ailleurs, la couche de matière plastique 21 est imprimée. Elle est ensuite associée par collage au support 20.

Les contacteurs 6 à 13 sont de préférence des contacteurs au carbone susceptibles, lorsqu'ils sont actionnés, de produire chacun le changement d'état de la bascule 31 à 38 qui lui est associée.

A cet effet, ils sont reliés à une horloge 30, comme la première porte des fonctions ET 41 à 48. Une action sur l'un des contacteurs 6 à 13 établit la liaison entre l'horloge 30 et la deuxième porte de ces mêmes fonctions ET 41 à 48.

La voie de sortie de ces fonctions 41 à 48 est en contact avec la porte d'entrée des bascules 31 à 38. L'une des portes de sortie de ces bascules est en liaison, par l'intermédiaire d'une fonction ET 51 à 58, avec les mémoires 3.

Le contacteur actionné détermine celle de ses mémoires qui est activée. Lorsque l'un des contacteurs 6 à 13 est actionné, les mémoires 3 sélectionnées coopèrent avec la fonction logique 60 pour déclencher, par l'intermédiaire des fonctions ET 64 et 63, le signal produit par le buzzer 4.

Ce signal est fonction et représentatif du numéro d'appel téléphonique sélectionné dans la mémoire 3.

De préférence, la carte de visite comporte un contacteur de test 14, dont l'actionnement permet de tester l'usure de la source électrique 5. Une photodiode 15 fournit le résultat de ce test. Bien entendu, le programme de test est géré par le microprocesseur 2, auquel sont reliés le contacteur de test 14 et la photodiode 15.

La carte de visite électronique à appel automatique de l'invention permet donc, par l'actionnement d'un seul contacteur, la composition du numéro d'appel téléphonique correspondant.

Dans sa version la plus simple, la carte de visite électronique à appel automatique ne concerne qu'un seul numéro d'appel et ne comporte donc qu'un seul contacteur.

Dans des versions plus élaborées, par exemple destinées à être diffusées par des entreprises, la carte de visite électronique à appel automatique permet, selon le choix du contacteur, mais toujours par l'actionnement d'un seul d'entre eux, de composer différents numéros de téléphone. On peut imaginer, par exemple, qu'une entreprise souhaite diffuser de cette manière le numéro de téléphone de son service de renseignements, de son service d'après-vente, de son service de vente....

Il peut également être souhaitable que la même carte de visite puisse être utilisée pour différentes fonctions sur l'ensemble d'un territoire divisé en zones d'appels, dans lesquelles le numéro à composer pour obtenir le même destinataire peut être différent.

Différents contacteurs peuvent alors être destinés à l'appel du même interlocuteur, en fonction de la zone géographique dans laquelle l'appel est composé. Par exemple, en France, un premier contacteur, associé à une première mémoire, correspond à l'appel depuis la région parisienne, alors qu'un deuxième contacteur, associé à une deuxième mémoire, correspond à un appel depuis la province.

Dans tous les cas, les informations graphiques portées par la feuille souple 21 donnent les informations nécessaires, pour que l'utilisateur choisisse le contacteur qu'il doit actionner en fonction du but recherché.

Les informations visuelles portées par la feuille de matière plastique 21 comportent avantageusement les nom, titre, qualité, adresses et numéros d'appels téléphoniques d'une personne.

La simplicité de la carte électronique de l'invention permet sa réalisation dans des dimensions très faibles, par exemple égales à celles d'une carte de visite normalisée.

Elle est de préférence parallélépipédique, sa longueur étant comprise entre 82 et 90 mm, avantageusement égale à 86 mm, sa largeur comprise entre 50 et 58 mm, avantageusement égale à 54 mm, et son épaisseur comprise entre 1,8 et 2,2 mm, avantageusement égale à 2 mm.

La carte de visite électronique à appel automatique de l'invention est donc un excellent support de promotion pour celui qui en est à l'origine et qui la diffuse, et son utilisation par son détenteur est particulièrement simple et appréciable.

Les signes de référence insérés après les caractéristiques techniques mentionnées dans les revendications, ont pour seul but de faciliter la compréhension de ces dernières, et n'en limitent aucunement la portée.

## Revendications

1. Carte de visite électronique à appel automatique (1) comportant un support d'informations visuelles et un circuit intégré comprenant un microprocesseur (2), au moins un contacteur (6 à 13), un émetteur sonore (4) et une source électrique (5),
caractérisée en ce qu'elle comporte une mémoire morte (3) associée à chaque contacteur (6 à 13) contenant une information préenregistrée représentative d'un numéro d'appel téléphonique, et en ce qu'une action d'un utilisateur sur un contacteur (6 à 13) produit l'émission d'un signal sonore codé en fonction de l'information préenregistrée, de telle sorte que celui-ci engendre la composition du numéro d'appel téléphonique qu'elle représente, lorsque l'émetteur sonore (4) est approché du micro d'un combiné téléphonique.

2. Carte de visite électronique à appel automatique selon la revendication 1, caractérisée en ce qu'elle comporte un support (20) portant le circuit intégré, les contacteurs (6 à 13), l'émetteur sonore (4) et la source électrique (5), et une feuille (21) en matière plastique recouvrant ces composants (2 à 13), fixée par collage sur ledit support, ladite feuille (21) constituant le support d'informations visuelles.

3. Carte de visite électronique à appel automatique selon la revendication 2, caractérisée en ce que la feuille (21) en matière plastique est imprimée par sérigraphie.

4. Carte de visite électronique à appel automatique selon l'une quelconque des revendications 1 à 3, caractérisée en ce qu'elle comporte une diode (15) et un contacteur de test (14) permettant de tester l'usure de la pile.

5. Carte de visite électronique à appel automatique selon l'une quelconque des revendications 1 à 4, caractérisée en ce que chaque contacteur (6 à 13) est associé à une bascule électronique (31 à 38) et à une mémoire (3), un changement d'état d'une bascule (31 à 38) provoqué par l'action de l'utilisateur sur le contacteur (6 à 13) produisant l'émission par l'émetteur sonore (4) d'un signal codé en fonction de l'information contenue dans la mémoire (3).

6. Carte de visite électronique à appel automatique selon l'une quelconque des revendications 1 à 5, caractérisée en ce qu'elle comporte huit contacteurs (6 à 13) et 8 mémoires préprogrammées.

7. Carte de visite électronique à appel automatique selon l'une quelconque des revendications 1 à 6, caractérisée en ce que l'une des informations préenregistrées correspond à un numéro d'appel d'une région extérieure à celle du numéro appelé.

8. Carte de visite électronique à appel automatique selon l'une quelconque des revendications 1 à 7, caractérisée en ce que ses dimensions sont celles d'une carte de visite normalisée.

9. Carte de visite électronique à appel automatique selon l'une quelconque des revendications 1 à 8, caractérisée en ce qu'elle est parallélépipédique, et que sa longueur est 86 ± 4 mm, sa largeur 54 ± 4 mm, et son épaisseur 2 ± 0,2 mm.

10. Carte de visite électronique à appel automatique selon l'une quelconque des revendications 1 à 9, caractérisée en ce que les informations visuelles représentent les nom, titre, qualité, adresses et numéros d'appel téléphoniques d'une personne.
